# EUROPÄISCHE PATENTSCHRIFT

(11) **EP 0 990 081 B1**
(45) Veröffentlichungstag und Bekanntmachung des Hinweises auf die Patenterteilung: **18.12.2002**
(21) Anmeldenummer: 98916624.4
(22) Anmeldetag: 30.04.1998
(51) Int. Cl.: E04D 12/00, B32B 5/26, B32B 11/10

(54) **DIFFUSIONSOFFENE SCHALUNGS- BZW. UNTERSPANNBAHN BZW. WINDSPERRBAHN**
DIFFUSION-PERMEABLE ROOF BOARDING, ROOF LINING OR WIND BRACING BOARD
PLANCHEIAGE DE TOIT, REVETEMENT DE TOIT OU CONTREVENTEMENT PERMEABLE A LA VAPEUR D'EAU

(30) Priorität: 18.06.1997 AT 106297
(43) Veröffentlichungstag der Anmeldung: 05.04.2000
(73) Patentinhaber: Büsscher & Hoffmann Gesellschaft mbH, 4470 Enns (AT)
(72) Erfinder: PFLEGER, Alfred, A-4470 Enns (AT)
(74) Vertreter: Pawloy, Heinrich, Dr.
(86) Internationale Anmeldenummer: AT9800113
(87) Internationale Veröffentlichungsnummer: WO98058140

(56) Entgegenhaltungen:
- EP-A- 0 708 212
- EP-A- 0 767 284
- DE-U- 9 407 750

## Beschreibung

Die vorliegende Erfindung betrifft eine diffusionsoffene Schalungs- bzw. Unterspannbahn bzw. Windsperrbahn mit einer weitgehend wasserdichten, aber wasserdampfdurchlässigen Lage, an die eine Schicht aus Bitumen anschließt.

Dachgeschosse unter Steildächern werden heute zumeist ausgebaut, um den umbauten Raum optimal auszunützen. Es ist daher notwendig, das Dach wärmezudämmen. Im Hinblick auf ökonomische Energiekosten ist dabei eine möglichst gute Wärmedämmung anzustreben, in vielen Ländern ist durch die jeweiligen gesetzlichen Regelungen eine entsprechend gute Wärmedämmung vorgeschrieben.

Früher wurden wärmegedämmte Steildächer in der Regel hinterlüftet ausgeführt. Wegen der Notwendigkeit einer optimalen Wärmedämmung wird aber heute auch der bisher für die Hinterlüftung vorgesehene Raum mit Wärmedämmaterial ausgefüllt, d.h. der gesamte Raum zwischen den Sparren bzw. auch der darüber und darunter wird für die Wärmedämmung verwendet. Oberhalb der Wärmedämmung bzw. der Sparren oder der Schalung wird die Schalungs- bzw. Unterspannbahn angebracht, darüber kommt dann die Dachdeckung.

Durch die fehlende Hinterlüftung kann es zu Kondensation von Wasserdampf kommen. Das kondensierte Wasser kann zu Fäulnis und anderen Schäden führen. Damit dies nicht passiert, ist es notwendig, bei nicht hinterlüfteten Dächern diffusionsoffene Schalungs- bzw. Unterspannbahnen zu verwenden, durch die der Wasserdampf nach außen gelangen kann, noch bevor er kondensiert.

Derartige diffusionsoffene Schalungs- bzw. Unterspannbahnen sind oft nicht unter Verwendung von Bitumen ausgebildet. Dies hat jedoch mehrere Nachteile:

Bei diesen Bahnen ist die UV-Beständigkeit geringer und die Empfindlichkeit gegen allgemeine, während der Bauphase üblicherweise einwirkenden mechanischen Belastungen nachteilig. Es ist auch bekannt, daß es zu Geräuschen durch Windeinwirkung und bei der Verarbeitung unter Sonneneinstrahlung zu Blendwirkungen kommen kann.

Bei der mechanischen Befestigung von herkömmlichen, nicht unter Verwendung von Bitumen ausgebildeten Unterspannbahnen kann es durch das Durchdringen der Befestigungselemente zu Beschädigungen kommen.

Die Schalungs- bzw. Unterspannbahnen werden üblicherweise vom Zimmerer aufgebracht, der Dachdecker führt die Eindekkungsarbeiten oft erst nach einigen Wochen aus. Bis dahin ist die Schalungs- bzw. Unterspannbahn die einzige Barriere gegen Wind und Wetter, d.h. sie muß möglichst wasserdicht sein. Viele der bekannten Unterspannbahnen halten jedoch längerem Schlagregen nicht stand, außerdem kann es infolge von Schäden beim Verlegen, insbesondere durch Einrisse an den Befestigungsstellen, zu Leckstellen kommen.

Um dem abzuhelfen, ist auch schon vorgeschlagen worden (EP-767 284 Al, WO-96/36778 A), daß an die weitgehend wasserdichte, aber wasserdampfdurchlässige Lage eine Schicht aus Bitumen anschließt. Bitumen ist jedoch alles andere als wasserdampfdurchlässig. Damit die Schalungs- bzw. Unterspannbahn dennoch diffusionsoffen bleibt, wurde die Bitumenschicht äußerst dünn ausgeführt. Die weitgehend wasserdichte, aber wasserdampfdurchlässige Lage bestand entweder aus einer Kunststoffolie aus hydrophilem Kunststoff, die durch ein Kunststoff-Faservlies abgedeckt war (EP-767284 Al), oder aus einem Meltblown-Faservlies mit Fasern von sehr geringem Titer, das auf beiden Seiten mit einem Vlies mit Fasern von größerem Titer abgedeckt war (WO-96/36778 A). In beiden Fällen war die Schicht aus Bitumen auf der Außenseite durch ein Kunststoffvlies abgedeckt.

Die Steigerung der mechanischen Festigkeit, insbesondere der Nagelausreißfestigkeit, durch die Bitumenschicht alleine ist gering.

Es ist Aufgabe der vorliegenden Erfindung, eine diffusionsoffene Schalungs- bzw. Unterspannbahn bzw. Windsperrbahn der eingangs genannten Art im Hinblick auf die mechanischen Eigenschaften, insbesondere hinsichtlich der Festigkeit, zu verbessern.

Diese Aufgabe wird durch eine diffusionsoffene Schalungs- bzw. Unterspannbahn bzw. Windsperrbahn der eingangs genannten Art erfindungsgemäß dadurch gelöst, daß die Schicht aus Bitumen aus einem mit Bitumen getränkten Glas- und/oder Kunststoffgewebe oder aus einem genadelten Glas- und/oder Kunststoffvlies besteht.

Wie im Rahmen der vorliegenden Erfindung festgestellt wurde, hat ein Glas- und/oder Kunststoffgewebe infolge der Gewebestruktur ausreichend viele Zwischenräume (Schuß und Kette), sodaß trotz des Imprägnierens mit Bitumen die Wasserdampfdurchlässigkeit gewährleistet ist. Die mechanischen Eigenschaften werden jedoch stark verbessert, vor allem durch das Glas- und/oder Kunststoffgewebe selbst. Sowohl die Nagelausreißfestigkeit als auch die Durchtrittsfestigkeit werden durch die vorliegende Erfindung deutlich erhöht.

Anstelle des Glas- und/oder Kunststoffgewebes kann auch ein Glas- und/oder Kunststoffvlies verwendet werden. Da diese im imprägnierten Zustand aber ohne weitere Vorkehrungen weitgehend wasserdicht und wasserdampfundurchlässig wären, ist erfindungsgemäß vorgesehen, diese zu nadeln. Die Eigenschaften entsprechen dann weitgehend jenen des Glas- und/oder Kunststoffgewebes.

Es ist zweckmäßig, wenn das mit Bitumen getränkte Glasund/oder Kunststoffgewebe oder Glas- und/oder Kunststoffvlies an der Außenseite mit einem Kunststoff-Faservlies, vorzugsweise aus Polypropylen, abgedeckt ist. Dies erhöht die Rutschfestigkeit und verbessert somit die Begehbarkeit. Polypropylen hat den Vorteil, daß es hydrophob ist, also Wasser nicht saugt, sodaß im Bereich von überlappenden Bahnen kein Wasser unter die obere Bahn hochsteigt. Schließlich verhindert das Kunststoff-Faservlies ein Verkleben der aufgerollten Schalungs- bzw. Unterspannbahn bzw. Windsperrbahn. Grundsätzlich kann aber das Verkleben statt durch ein Kunststoff-Faservlies auch durch herkömmliche Abstreumittel (z.B. Sand, Talkum) oder durch Folien verhindert werden.

Vorzugsweise besteht die weitgehend wasserdichte, aber wasserdampfdurchlässige Lage aus einer Folie, die durch zwei Vliese, vorzugsweise aus Polypropylen, beidseitig geschützt ist. Dies um Verletzungen der sehr dünnen Folie zu vermeiden.

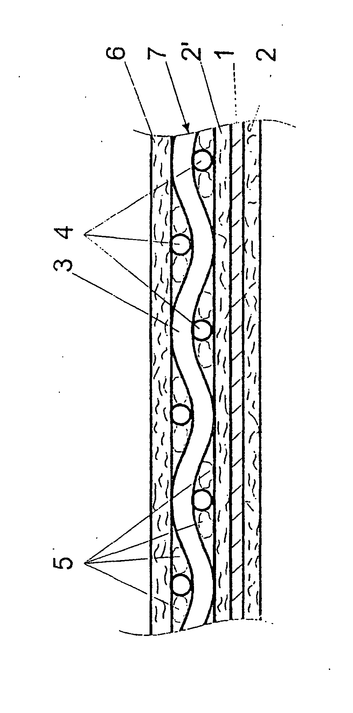

Anhand der beiliegenden Zeichnung wird die Erfindung näher erläutert. Die einzige Figur zeigt einen Schnitt durch eine erfindungsgemäße Schalungs- bzw. Unterspannbahn bzw. Windsperrbahn.

Die Schalungs- bzw. Unterspannbahn bzw. Windsperrbahn weist eine weitgehend wasserdichte, aber wasserdampfdurchlässige Folie 1 auf. Diese Folie 1 ist das weitgehend wasserdichte Element der Schalungs- bzw. Unterspannbahn bzw. Windsperrbahn.

Die Folie 1 ist auf beiden Seiten durch ein Vlies 2 und ein Vlies 2', beide aus Polypropylen, geschützt. An der Oberseite schließt ein Glasgewebe 7 an, das aus Schußfäden 3 und Kettfäden 4 besteht. Anstelle des Glasgewebes könnte auch ein Kunststoffgewebe oder ein Vlies aus Glas und/oder Kunststoff verwendet werden. Die Zwischenräume des Glasgewebes 7 sind großteils, aber nicht vollständig mit einem Bitumen 5 oder Polymerbitumen, vorzugsweise mit Spezialelastomerbitumen, ausgefüllt.

Dadurch wird auch die Verbindung zum Vlies 2' hergestellt, es ist also kein zusätzlicher Kleber notwendig. Zwischen den Kreuzungen von Schußfäden 3 und Kettfäden 4 befinden sich Zwischenräume, durch die Luft und Wasserdampf hindurchtreten können. Die Oberseite des Glasgewebes 7 ist durch ein Kunststoff-Faservlies 6 mit einer flächenbezogenen Masse von 10-50 g/m², vorzugsweise 30 g/m² abgedeckt. Es besteht vorzugsweise aus hydrophobem Polypropylen.

Wenn statt des Glasgewebes 7 ein Glas- und/oder Kunststoffvlies verwendet wird, so muß dieses nach dem Tränken mit dem Spezialelastomerbitumen genadelt werden, damit es wasserdampfdurchlässig wird.

Eine derartige Schalungs- bzw. Unterspannbahn bzw. Windsperrbahn kann mit einer flächenbezogenen Masse von 200-1200 g/m², vorzugsweise 600 g/m², hergestellt werden. Dies ist ausreichend leicht für eine Verlegung am Dach. Dabei beträgt die flächenbezogenen Masse des Glasgewebes 7 50-200 g/m², vorzugsweise 90 g/m², und die der Folie 1 samt den beiden Vliesen 2 und 2' 40-200 g/m², vorzugsweise 60 g/m². Das Spezialelastomerbitumen wird mit einer flächenbezogenen Masse von 200-700 g/m², vorzugsweise 400 g/m², aufgebracht.

Trotz des nicht zu großen Wertes für die flächenbezogene Masse ergeben sich sehr gute mechanische Eigenschaften. Die Höchstzugkraft (gem. ÖNORM B 3646) beträgt bis zu 1300 N, meist 500-800 N, sowohl längs als auch quer. Auch die Nagelausreißfestigkeit und die Durchtrittsfestigkeit sind sehr hoch. Die Schalungs- bzw. Unterspannbahn bzw. Windsperrbahn ist in einem hohen Maße hitze- und kältebeständig (gemäß ÖNORM B 3646).

Obwohl die Folie 1 nur geringen Wasserdrücken standhalten kann, ist die erfindungsgemäße Schalungs- bzw. Unterspannbahn bzw. Windsperrbahn auch bei Schlagregen weitgehend dicht. (Dies ist für die Zeit zwischen dem Verlegen der Schalungs- bzw. Unterspannbahn und dem Decken des Daches wichtig.) Der Grund dafür ist, daß der Druck, mit dem die Wassertropfen bei Schlagregen auftreffen, von dem bitumengetränkten Glasgewebe 7 aufgenommen wird, sodaß die Folie 1 nur dem statischen Druck von höchstens einigen mm Wassersäule ausgesetzt ist. Dennoch ist der sd-Wert dieser Folie < 0,1 m.

Die Herstellung der Schalungs- bzw. Unterspannbahn bzw. Windsperrbahn erfolgt, indem ein Glasgewebe mit der entsprechenden Spezialelastomerbitumenmenge imprägniert wird. Während das Spezialelastomerbitumen noch heiß ist, wird das Kunststoff-Faservlies 6 auf die eine Seite aufkaschiert und die Kombination Vlies 2, Folie 1 und Vlies 2' auf der anderen Seite. Diese Bahn wird dann heiß'verpreßt.

Wichtig ist, daß die Spezialelastomerbitumenmenge so gesteuert wird, daß das Glasgewebe 7 nur imprägniert und soweit beschichtet wird, daß einerseits eine ausreichende Verklebung mit den beiden Vliesen stattfindet, andererseits aber die Diffusionsoffenheit gegeben ist.

Die erfindungsgemäße Schalungs- bzw. Unterspannbahn wird üblicherweise im Steildachbereich auf die Sparren und Wärmedämmung oder auf eine Holzschalung ohne Hinterlüftung aufgebracht. Sie kann aber auch als Windsperrbahn eingesetzt werden.

## Patentansprüche

1. Diffusionsoffene Schalungs- bzw. Unterspannbahn bzw. Windsperrbahn mit einer weitgehend wasserdichten, aber wasserdampfdurchlässigen Lage, an die eine Schicht aus Bitumen anschließt, **dadurch gekennzeichnet, daß** die Schicht aus Bitumen aus einem mit Bitumen (5) getränkten Glas- und/oder Kunststoffgewebe (7) oder aus einem genadelten Glas- und/oder Kunststoffvlies besteht.

2. Diffusionsoffene Schalungs- bzw. Unterspannbahn bzw. Windsperrbahn nach Anspruch 1, **dadurch gekennzeichnet, daß** das mit Bitumen (5) getränkte Glas- und/oder Kunststoffgewebe (7) oder Glas- und/oder Kunststoffvlies an der Außenseite mit einem Kunststoff-Faservlies (6), vorzugsweise aus Polypropylen, abgedeckt ist.

3. Diffusionsoffene Schalungs- bzw. Unterspannbahn bzw. Windsperrbahn nach Anspruch 1 oder 2, **dadurch gekennzeichnet, daß** die weitgehend wasserdichte, aber wasserdampfdurchlässige Lage aus einer Folie (1) besteht, die durch zwei Vliese (2, 2'), vorzugsweise aus Polypropylen, beidseitig geschützt ist.

## Claims

1. A formwork or underlay or wind break sheet open to diffusion, with a largely waterproof, but water vapour permeable layer with a layer of bitumen placed next to said layer, **characterised in that** the layer of bitumen consists of a glass and/or plastic fibre fabric (7) soaked with bitumen (5) or of an acicular glass and/or plastic fibre fleece.

2. The formwork or underlay or wind break sheet open to diffusion according to claim 1, **characterised in that** the glass and/or plastic fibre fabric (7) soaked with bitumen (5) or the glass and/or plastic fibre fleece are covered on the outside with a plastic fibre fleece (6), preferably made of polypropylene.

3. The formwork or underlay or wind break sheet open to diffusion according to claim 1 or 2, **characterised in that** the largely waterproof, but water vapour permeable layer consists of a film (1) which is protected on both sides by two fleece parts (2, 2') preferably made of polypropylene.

## Revendications

1. Bande de coffrage ou bande de sous-tension ou bande d'arrêt pour le vent, ouverte à la diffusion, avec une couche largement étanche à l'eau, mais perméable à la vapeur d'eau, à laquelle se raccorde une couche à base de bitume, **caractérisée en ce que** la couche à base de bitume est à base d'un tissu de verre et/ou tissu de plastique (7), imbibé avec du bitume (5) ou d'un non-tissé de verre et/ou de plastique cloué.

2. Bande de coffrage ou bande de sous-tension ou bande d'arrêt pour le vent selon la revendication 1, **caractérisé en ce que** le tissu de verre et/ou le tissu de plastique (7) imbibé de bitume (5) ou le non-tissé de verre et/ou le non-tissé de plastique (6) est recouvert sur le côté extérieur d'un non-tissé de plastique (6), de préférence à base de polypropylène.

3. Bande de coffrage ou bande de sous-tension ou bande d'arrêt pour le vent, ouverte à la diffusion, selon la revendication 1 ou 2, **caractérisée en ce que** la couche largement étanche à l'eau, mais perméable à la vapeur d'eau, est à base d'un film (1), qui est protégé des deux côtés par deux non-tissés (2, 2'), de préférence à base de polypropylène.
